**Europäisches Patentamt**

**European Patent Office**

**Office européen des brevets**

(19)

(11) Veröffentlichungsnummer: **0 322 693**

**A1**

# (12) EUROPÄISCHE PATENTANMELDUNG

(21) Anmeldenummer: **88121192.4**

(22) Anmeldetag: **17.12.88**

(51) Int. Cl.⁴ **F16C 39/06**

(30) Priorität: **24.12.87 DE 3744143**

(43) Veröffentlichungstag der Anmeldung:
**05.07.89 Patentblatt 89/27**

(84) Benannte Vertragsstaaten:
**AT BE CH DE ES FR GB IT LI LU NL SE**

(71) Anmelder: **Kernforschungsanlage Jülich GmbH**
**Wilhelm-Johnen-Strasse**
**D-5170 Jülich(DE)**

(72) Erfinder: **Poppe, Ulrich, Dr.**
**Paulistrasse 7**
**D-5000 Köln 41(DE)**
Erfinder: **Stritzker, Bernd, Prof.**
**Auf der Lache 8**
**D-5172 Linnich(DE)**

(54) **Magnetische Lagerung eines Rotors an einem Stator.**

(57) Die Erfindung bezieht sich auf die magnetische Lagerung eines Rotors in einem Stator, bei der ein Lagerteil permanentmagnetisch ist und der Rotor im Magnetfeld berührungslos in seiner Solldrehachse stabilisiert ist. Erfindungsgemäß besteht das nicht-permanentmagnetische Lagerteil aus supraleitendem Material. Dazu ist eine Kühleinrichtung zur Kühlung des aus supraleitendem Material bestehenden Lagerteils vorgesehen, mittels dessen eine Temperatur unterhalb der Übergangstemperatur des Supraleiters einstellbar ist. Bei einer der Ausführungsformen der Magnetlagerung besteht der Stator aus supraleitendem Material und weist eine durchgehende zylindrische Bohrung auf. Der zugehörige Rotor steht im Bereich der Bohrung aus wenigstens einem Permanentmagneten mit auf der Rotorachse liegenden Magnetpolen.

FIG. 1

## Magnetische Lagerung eines Rotors an einem Stator

Die Erfindung bezieht sich auf eine magnetische Lagerung eines Rotors an einem Stator, bei der ein Lagerteil permanentmagnetisch ist und der Rotor im Magnetfeld berührungslos in seiner Solldrehachse stabilisiert ist.

Derartige Magnetlagerungen sind bekannt. Ihr Zweck ist es, den drehbaren Teil (Rotor) ohne mechanischen Kontakt zum feststehenden Teil (Stator), daß heißt berührungslos, zu lagern, so daß keine Lagerreibung und kein Verschleiß auftritt und insbesondere keine Schmiermittel zum Betrieb der Lagerung nötig sind.

Ist der Rotor als Permanentmagnet ausgebildet, so wird bei den bekannten Magnetlagern das äußere Magnetfeld durch Ringspulen erzeugt. Bei geeigneter Anordnung der Ringspulen und unter Einsatz von induktiven Sensoren und elektronischen Regelgeräten kann, wie im Falle der magnetischen Lagerung eine Drehanodenröntgenröhre gemäß der DE-OS 27 16 079, der Rotor dabei sowohl axial als auch radial stabilisiert sein.

Es ist Aufgabe der Erfindung, eine Magnetlagerung zu schaffen, die einfach im Aufbau ist und ohne elektrische Einrichtung zur Erzeugung des äußeren Magnetfeldes sowie ohne elektronische Regeleinrichtungen zur Stabilität des Rotors auskommt.

Diese Aufgabe wird gemäß der Erfindung dadurch gelöst, daß das nicht-permanentmagnetische Lagerteil aus supraleitendem Material besteht und eine Kühleinrichtung zur Kühlung des aus supraleitendem Material bestehenden Lagerteils auf eine Temperatur unterhalb der Übergangstemperatur des Supraleiters vorgesehen ist. Dabei kann prinzipiell jedes Lagerteil (Rotor bzw. Stator) permanentmagnetisch bzw. supraleitend sein, jedoch ist es, da das supraleitende Lagerteil gekühlt werden muß, zweckmäßig, daß der Stator und nicht der Rotor aus supraleitendem Material besteht.

Das Magnetfeld des Rotors, das zweckmäßigerweise so bemessen ist, daß es das untere kritische Magnetfeld $H_{c_1}$ des Supraleiters nicht übersteigt, wird durch den Spalt zwischen Rotor und Stator geführt und erzeugt auf der dem Rotor zugewandten Seite des Stators einen elektrischen Strom, der ein dem Magnetfeld des Rotors entgegengesetztes Magnetfeld induziert. Durch die radial gerichteten Magnetfeldkräfte wird der Rotor dabei radial und durch die längs der Rotorachse ausgerichteten Kräfte axial stabilisiert.

Bei einer zweckmäßigen Ausführungsart der Magnetlagerung gemäß der Erfindung besteht der Stator aus supraleitendem Material und weist eine durchgehende zylindrische Bohrung auf und der Rotor besteht im Bereich der Bohrung aus wenigstens einem Permanentmagneten mit auf der Rotorachse liegenden Magnetpolen. Eine andere Ausführungsart besteht darin, daß der Stator aus supraleitendem Material besteht und zur Aufnahme eines Teils des Rotors eine Sackbohrung aufweist, wobei der Rotor im Bereich der Bohrung aus wenigstens einem Permanentmagnet mit auf der Rotorachse liegenden Magnetpolen besteht. Durch die so ausgerichteten Magnetfelder werden im Supraleiter ortsfeste, von der Drehung des Rotors unabhängige Ringströme erzeugt und damit auch ortsfeste magnetische Gegenfelder induziert.

Für den Fall, daß der Rotor aus mehr als einem Permanentmagneten besteht, sind diese hinsichtlich ihrer Magnetfeldrichtung alternierend hintereinander angeordnet. An den jeweils innerhalb der zylindrischen Bohrung liegenden Polen der Permanentmagnete wird durch die radial gerichteten Kräfte der einander entgegengesetzt gerichteten Magnetfelder (des Rotors bzw. des Stators) der Rotor in seiner Lage radial stabilisiert, ohne daß es hierzu einer elektronischen Regelung bedarf.

An der Stirnfläche der Sackbohrung wird der Rotor durch die längs der Rotorachse verlaufenden Kräfte des entgegengesetzten Magnetfeldes nach einer Seite hin axial stabilisiert.

Eine gewisse axiale Stabilisierung des Rotors - wenn auch nicht mit der gleichen Wirkung wie bei der Sackbohrung - wird auch dadurch erreicht, daß je Öffnung der Bohrung ein Permanentmagnet am Rotor so angeordnet ist, daß er an die Öffnung heranreicht oder diese teilweise überragt. Durch die die Öffnung der Bohrung übergreifenden Magnetfeldlinien bzw. -kräfte und das entsprechende Gegenfeld wird der Rotor in seiner axialen Lage gehalten.

Eine der Wirkung der Sackbohrung vergleichbare axiale Stabilisierung des Rotors wird bei einer weiteren Ausführungsart der Magnetlagerung gemäß der Erfindung dadurch erzielt, daß sich am Rotor außerhalb des Bereichs der Bohrung ein Permanentmagnet anschließt, dessen Durchmesser größer ist als der Durchmesser der Bohrung. Der dem Stator zugewandte, diesen übergreifenden Teil des Permanentmagneten ist dem gegenüberliegenden Teil des Stators rotationssymmetrisch angepaßt, was am besten durch eine plane Fläche der einander gegenüberliegenden Seiten von Permanentmagnet und Stator erreicht wird.

Eine der Wirkung der Sackbohrung vergleichbare axiale Stabilisierung des Rotors wird außerdem dadurch erreicht, daß die Bohrung eine zylinderförmige Erweiterung aufweist, an deren Stelle der Rotor einen in die Erweiterung berührungslos passenden zylinder- bzw. scheibenförmigen Permanentmagneten aufweist. Diese Erweiterung kann sich am Ende der Bohrung, aber auch in derselben befinden.

Die Magnetlagerung gemäß der Erfindung ist in der Zeichnung schematisch dargestellt und wird im folgenden näher erläutert:

Es zeigen

Figur 1 eine magnetische Lagerung mit durchgehender zylindrischer Bohrung im supraleitenden Stator und einem aus einem Permanentmagneten im Bereich des Bohrloches bestehenden Rotor;

Figur 2 eine magnetische Lagerung gemäß Figur 1, jedoch mit einem Rotor mit mehreren hintereinander angeordneten Permanentmagneten;

Figur 3 eine magnetische Lagerung mit Sackbohrung im supraleitenden Stator und einem zwei Permanentmagnete aufweisenden Rotor;

Figur 4 eine magnetische Lagerung gemäß Figur 3 mit zusätzlichem Permanentmagneten außerhalb der Sackbohrung;

Figur 5 eine magnetische Lagerung mit durchgehender zylindrischer Bohrung mit Erweiterung und außerhalb der Bohrung am Rotor angebrachten Permanentmagneten;

Figur 6 eine magnetische Lagerung mit durchgehender zylindrischer Bohrung mit im Bereich der Öffnungen liegenden Erweiterungen und in diese berührungslos passenden Permanentmagneten des Rotors.

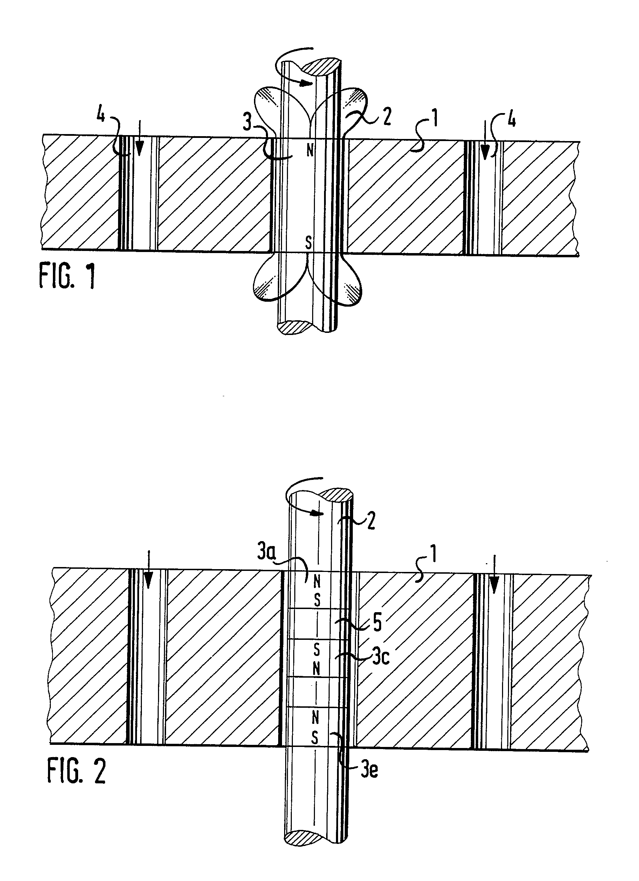

Bei der in Figur 1 dargestellten Ausführungsart der magnetischen Lagerung besteht der Stator 1 aus einer Platte bzw. Scheibe aus supraleitendem Material, beispielsweise eine 10 mm dicke Platte aus $Y\,Ba_3Cu_3O_7$, die auf 78°C gekühlt ist. Der Rotor 2 (ein Permanentmagnet einer Länge von etwa 10 mm und einem Durchmesser von 5 mm) be steht im Bereich der zylindrischen Bohrung (Durchmesser 6mm) aus einem Stabmagneten 3, dessen Pole auf der Rotorachse liegen. Da die Kraftlinien des Magnetfeldes des Permanentmagneten die kritische Magnetfeldstärke $H_{c1}$ des supraleitenden Materials nicht bzw. nicht sehr übersteigen sollten, wird das Magnetfeld des Permanentmagneten, wie dargestellt, hauptsächlich durch den Spalt zwischen Stator und Rotor geführt und dort verdichtet. Durch die längs der Rotorachse gerichteten Magnetfeldkräfte (des Magnetfeldes des Permanentmagneten und des erzeugten Gegenfeldes) wird an der Kante der Bohrung im Stator eine gewisse axiale Stabilisierung des Rotors erzielt. Durch die radial gerichteten Kräfte wird der Rotor radial stabilisiert.

Die zur Kühlung des supraleitenden Materials erforderliche Kühleinrichtung ist vereinfacht durch Kanäle 4, welche von der Kühlflüssigkeit (z. B. flüssiger Stickstoff) durchflossen werden, schematisch dargestellt.

Bei der in Figur 2 dargestellten Ausführungsform besteht der Rotor im Bereich des Stators 1 aus drei hintereinander angeordneten Permanentmagneten 3a, 3c, 3e mit Zwischengliedern 5, beispielsweise aus Kupfer.

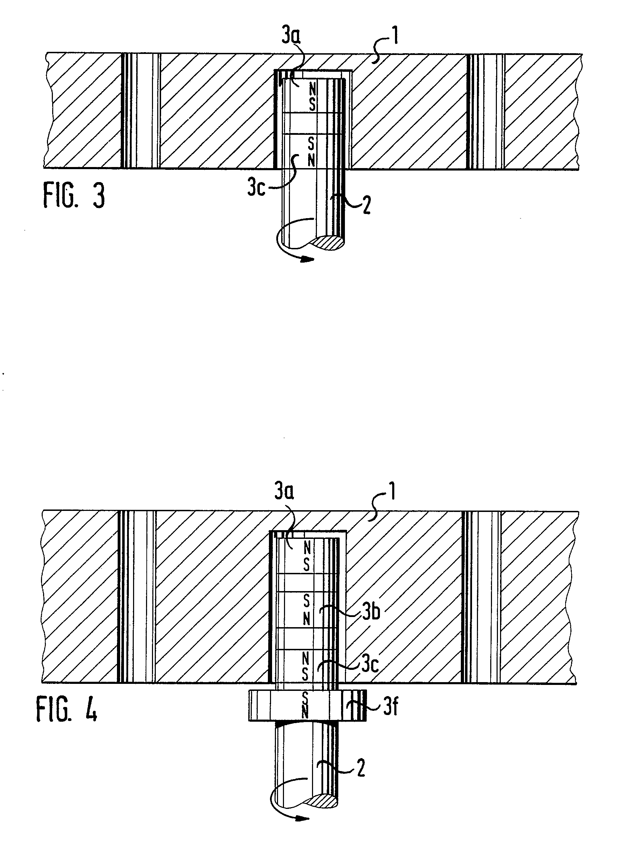

Bei der in Figur 3 dargestellten Ausführungsart ist der Rotor zur Stirnseite der Sackbohrung hin axial stabilisiert. Eine, wenn auch schwächere axiale Stabilisierung in entgegengesetzter Richtung ist durch den zweiten, an der Öffnung der Sackbohrung angeordneten Permanentmagneten gegeben. Die radiale Stabilisierung des Rotors wird - wie bei den in den Figuren 1 und 2 gezeigten Ausführungsarten - durch die radial gerichteten Kräfte erzielt.

Bei der in Figur 4 dargestellten Ausführungsart wird die durch die Stirnfläche der Sackbohrung bewirkte axiale Stabilisierung durch den äußeren Magneten 3f unterstützt.

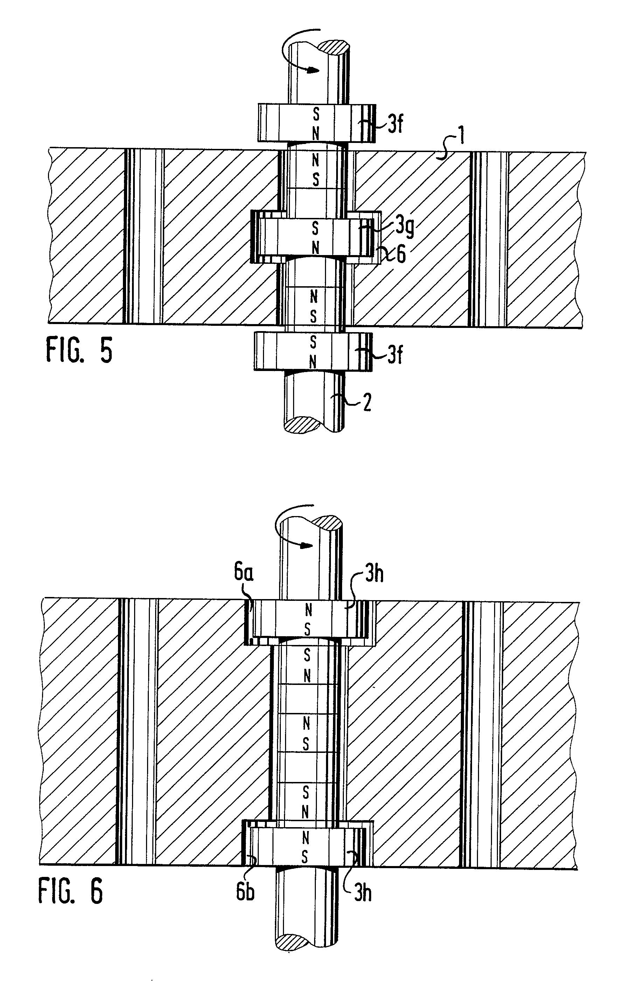

Figur 5 zeigt eine Ausführungsart, bei der der Rotor sowohl in radialer als auch in axialer Richtung stabilisiert ist. Dabei wird die axial Stabilisierung durch die äußeren Permanentmagnete 3f und durch den in der zylindrischen Erweiterung 6 der Bohrung befindlichen Permanentmagneten 3g bewirkt.

Auch bei der in Figur 6 dargestellten magnetischen Lagerung ist der Rotor in radialer Richtung, nämlich durch die radialen Kräfte aller Permanentmagnete, als auch in axialer Richtung und zwar in erster Linie durch die in den Erweiterungen 6a und 6b liegenden Permanentmagnete 3h stabilisiert

## Ansprüche

1. Magnetische Lagerung eines Rotors an einem Stator aus supraleitendem Material, bei der der Rotor permanentmagnetisch ist mit auf der Rotorachse liegenden Magnetpolen und im Magnetfeld berührungslos in seiner Solldrehachse stabilisiert ist und eine Kühleinrichtung zur Kühlung des Stators auf eine Temperatur unterhalb der Übergangstemperatur des Supraleiters vorgesehen ist,

**dadurch gekennzeichnet,**

daß der Stator (1) eine zylindrische Bohrung aufweist, daß der Rotor (2) aus mehr als einem Permanentmagneten (3a bis 3e) besteht, die hinsichtlich ihrer Magnetfeldrichtung alternierend hintereinander angeordnet sind und je Öffnung der Bohrung ein Permanentmagnet (3; 3a; 3e) am Rotor (2) so angeordnet ist, daß er an die Öffnung heranreicht oder diese teilweise überragt.

2. Magnetische Lagerung nach Anspruch 1,
**dadurch gekennzeichnet,**
daß der Stator (1) zur Aufnahme eines Teils des Rotors (2) eine Sackbohrung aufweist.

3. Magnetische Lagerung nach Anspruch 1 oder 2,
**dadurch gekennzeichnet,**
daß sich am Rotor (2) außerhalb des Bereichs der Bohrung ein Permanentmagnet (3f) anschließt, dessen Durchmesser größer ist als der Durchmesser der Bohrung.

4. Magnetische Lagerung nach einem der Ansprüche 1 bis 3,
**dadurch gekennzeichnet,**
daß die Bohrung eine zylinderförmige Erweiterung (6) aufweist. an deren Stelle der Rotor (2) einen in die Erweiterung berührungslos passenden zylinder- bzw. scheibenförmigen Permanentmagneten (3g, 3h) aufweist.

FIG. 1

FIG. 2

FIG. 3

FIG. 4

FIG. 5

FIG. 6

**Europäisches Patentamt**

# EUROPÄISCHER RECHERCHENBERICHT

Nummer der Anmeldung

EP 88 12 1192

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 378 315 (WEBB) <br> * Spalte 3, Zeilen 28-47; Figuren 1-4 * <br> --- | 1 | F 16 C 39/06 |
| Y | DE-A-2 421 853 (SMIT) <br> * Figuren 3,4 * | 1 | |
| A | | 3 | |
| | --- | | |
| A | US-A-3 663 075 (KRONENBERG) <br> * Figur 8 * <br> --- | 2 | |
| A | US-A-4 072 370 (WASSON) <br> * Figur 1 * <br> --- | 1 | |
| A | US-A-3 476 448 (LODE) <br> * Figuren 1,2 * <br> ----- | 1 | |

RECHERCHIERTE SACHGEBIETE (Int. Cl.4)

F 16 C
H 02 K

Der vorliegende Recherchenbericht wurde für alle Patentansprüche erstellt

| Recherchenort | Abschlußdatum der Recherche | Prüfer |
|---|---|---|
| DEN HAAG | 10-04-1989 | ONILLON C.G.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................
& : Mitglied der gleichen Patentfamilie, übereinstimmendes Dokument

EPO FORM 1503 03.82 (P0403)